# EUROPEAN PATENT APPLICATION

(11) **EP 1 041 057 A2**
(43) Date of publication of application: **04.10.2000**
(21) Application number: 00500046.8
(22) Date of filing: 27.03.2000
(51) Int. Cl.: C05F 3/00

(54) **Procedure for sterilisation of pig manure and elimination of nitrogenated compounds by stripping ammonium nitrogen**

(30) Priority: 27.03.1999 ES 9900622
(71) Applicant: Ros Roca, S.A., 25300 Tarrega (Lleida) (ES)
(72) Inventor: Ramon, Sunyer Martin, (ES)
(74) Representative: Primo de Rivera y Urquijo, Jose Antonio

(57) **Abstract**

The present invention relates to a procedure for the treatment of pig manure, consisting of sterilising said manure by the application of heat derived partly from biological processes taking place within the manure itself and partly from external sources. The heat from external sources will be preferably derived from a co-generation process. Nitrogen compounds converted to ammonium form, which remain dissolved in the manure during the sterilising process, are removed by passing hot gas, preferably hot air, through the sterilised manure.

## Description

### OBJECT OF THE INVENTION

The present invention relates to a procedure for the treatment of pig manure, consisting of sterilising said manure by the application of heat derived partly from biological processes taking place within the manure itself and partly from external sources. The heat from external sources will be preferably derived from a co-generation process. Nitrogen compounds converted to ammonium form dissolved in the manure during the sterilising process are removed by passing hot gas, preferably hot air, through the sterilised manure. The gas used for stripping the ammonium nitrogen may be passed through a scrubbing tower for removal of ammonium nitrogen or submitted to biological process for conversion to nitric nitrogen followed by denitrification.

### DISCUSSION OF THE STATE OF THE ART

In recent years there has been a large growth in the practice of intensive livestock farming. This, in turn, has led to a large increase in the amount of animal waste. Disposal of this animal waste, particularly pig waste, has become an environmental problem, as this type of waste tends to be rich in nitrogen compounds. Thus, direct release into the environment can lead to problems such as an increase in nitrates in groundwater. In light of this, much effort has gone into developing methods and procedures for the treatment of such waste to render it harmless.

For example, the patent DE 3920539 discloses a method whereby liquid manures are fermented at temperatures above 50° C to effect sterilisation followed by aerobic mesophilic fermentation with minimised denitrification.

EP 0565176-A2 discloses a process for the treatment of organic waste in which, after an initial separation of the solid and liquid fractions of the waste, the liquid part is sterilised by anaerobic fermentation leading to an increase in solubilised nitrogen and a decreased amount of insoluble nitrogen compounds, followed by separation of the soluble and insoluble compounds.

The methods based on fermentation to provide the heat to sterilise the manure suffer from the drawback that the temperature reached by the fermenting manure is not very high, of the order of 50° C, which means that the time taken to effect complete sterilisation is long, of the order of 5 days. Thus, to put these methods into practice large and costly installations need to be constructed.

Another possibility is to directly heat the manure. However, the energy demands for heating the manure from its input temperature of 15° C to temperatures sufficiently high to provide rapid sterilisation are high, increasing the economic cost of the operation. Furthermore, problems also arise due to the production of ammonium nitrogen in the sterilised manure.

### BACKGROUND OF THE INVENTION

To overcome the problems prevailing in the procedures described in the state of the art, namely the high economic cost derived from the energy requirements of the procedures and the build-up of the nitrogen compounds in the manure as a result of the sterilising process, the following improved procedure has been devised. The improved procedure has also been designed so that the products of the sterilisation and purification process comply with the requirements of environmental laws, both at a national and international level.

The procedure according to the invention takes place in a closed recipient, which is thermally insulated. Heat is produced by the metabolic action of bacteria present in the manure. In conditions of thermal isolation this heat in itself would produce temperatures of around 50° C and eventually lead to sterilisation of the manure, but the time taken for sterilisation under these conditions would be of the order of 6 days. To speed up the sterilisation process the invention provides an additional heat source, increasing the temperature within the recipient to 70° C, thus drastically reducing the sterilisation time. The external heat source may be derived from a co-generation process, for example, the burning of some combustible material may be used to generate electricity used in some other process external to the procedure of the invention, and the residual heat used to heat air or produce steam which is then introduced into the closed recipient.

The recipient will be maintained in conditions of micro-aerobiosis, in other words, with a very low concentration of dissolved oxygen and an equally low redox potential. Under these conditions, namely micro-aerobiosis, low redox potential and a temperature of approximately 70° C, the time required for sterilising of the manure will be reduced to approximately one hour.

This process, while leading to considerable energy savings, has the drawback that nitrogen compounds are generated during the process. Therefore the present invention also provides a method for the elimination of said nitrogen compounds. The method consists of adjusting the pH to a certain alkaline value while maintaining the temperature at 70° C and then passing hot air through the sterilised mixture to remove the dissolved ammonium nitrogen. The amount of air that has to be passed through the sterilised mixture to remove the ammonium nitrogen dissolved therein will depend on the quantity of ammonium nitrogen present: the greater the ammonium nitrogen load the greater the quantity of air required.

If the airflows are above a certain value, which will be the case in general when the pH has been adjusted to a value of around 10, then it is necessary to pass this air, rich in ammonium nitrogen, through gas-scrubbing towers containing an aqueous solution of sulphuric acid as scrubbing liquid. The process produces wash water rich in ammonium sulphate.

Alternatively, if the airflows are below a certain value, which will be the case in general when the pH of the sterilised manure is nearly neutral, the air rich in ammonium nitrogen, may be submitted to a process of biological conversion to nitric nitrogen and denitrification.

The efficiency of elimination of ammonium nitrogen will depend on the temperature of the sterilised manure, the pH of the final mass and the amount of air passed through the sterilised manure to remove the ammonium nitrogen.

The sterilised manure, largely free of ammonium nitrogen, is then passed on to a standard physical-chemical treatment, followed by a biological degradation treatment.

### BRIEF DESCRIPTION OF THE DRAWINGS

To facilitate a correct understanding of the invention the elements thereof are described with reference to the drawing accompanying the present document as an integral part thereof. The drawing is intended for illustrative purposes and in no way constitutes a limitation of the scope of the invention.

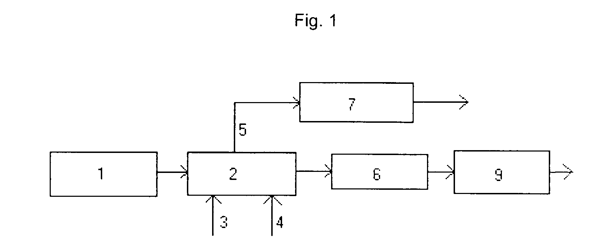

Figure 1 shows a schematic representation of an embodiment according to the invention.

### DESCRIPTION OF A PREFERRED EMBODIMENT OF THE INVENTION

The procedure according to the present invention for sterilising pig manure and elimination of ammonium nitrogen compounds by stripping with hot air is applicable to liquid residues, in particular liquid pig manure, treated in their virgin state.

The liquid pig manure, homogenised and in its virgin state, (1 ) is passed into the closed and thermally insulated reactor (2) or thermophilic digester in which a temperature of 50° C is reached due to the action of bacterial metabolism. Additional heat is supplied from an external source (4), to increase the reactor temperature to 70° C, thus reducing the sterilisation time from the order of 6 days corresponding to the process with no additional heat source, to just one hour. The additional heat source is derived from a co-generation plant (for example an electricity generation plant) and is supplied either in the form of steam or hot air.

In order to eliminate the contaminating gases present in the sterilised manure, and taking advantage of the fact that the sterilised manure is at a temperature of 70° C, after a hydraulic retention of at least one hour, the pH of the mass is adjusted to 10. Hot air (3) is then introduced into the reactor (2), stripping away the ammonium nitrogen. The airflow necessary depends on the quantity of ammonium nitrogen to be removed. If the airflow is high then the air output (5) is passed through a gas-scrubbing tower (7), scrubbing the gases evaporated from the sterilised manure with an aqueous solution of sulphuric acid, maintaining the pH below 5. The resulting wash solution is rich in ammonium sulphate.

The sterilised manure, after removal of the ammonium nitrogen compounds, is submitted to a physical-chemical treatment (6), followed by a biological degradation process (9) using heterotrophic micro-organisms.

This procedure object of the invention presents considerable advantages over existing methods. The cost of sterilising is considerably reduced by taking advantage of the heat produced by the manure itself, and using an additional heat source derived from co-generation. Additionally, at the end of the procedure object of the present invention, the analytical parameters of the product of the treatment procedure are in accordance with existing European legislation relating to treatment of waste products.

## Claims

1. A procedure for the sterilisation of pig manure and elimination of nitrogenated compounds contained therein by stripping the ammonium nitrogen after sterilisation, said procedure pertaining to an overall process whereby the pig manure to be treated (1 ) is sterilised by heating (2) and then submitted to further physical-chemical and biological treatment, characterised in that the heat required for said sterilisation of the pig manure in virgin state is supplied in two stages, first by the supply of air to activate aerobic bacterial metabolic processes producing heat and second by application of an external heat source (4) derived from cogeneration until a temperature of 70° C is attained, said temperature being maintained for a predetermined hydraulic retention time of at least 1 hour, before introducing hot air (3), also derived from cogeneration, to eliminate the ammonium nitrogen contained in the sterilised pig manure from the reactor by stripping.

2. A procedure for the sterilisation of pig manure and elimination of nitrogenated compounds by stripping the ammonium nitrogen after sterilisation, according to claim 1, characterised in that the pH of the sterilised pig manure in the reaction chamber (2) is adjusted to 10 and said hot air, rich in ammonium nitrogen, is removed from the reaction chamber (5), passing through a scrubber tower (7) containing aqueous sulphuric acid maintained at pH 5 or lower.

3. A procedure for the sterilisation of pig manure and elimination of nitrogenated compounds by stripping the ammonium nitrogen, according to claim 1, characterised in that said hot air, rich in ammonium nitrogen, is removed from the reaction chamber and subsequently submitted to a process of biological conversion to nitric nitrogen (6) and subsequent denitrification (9).
